# EUROPÄISCHE PATENTSCHRIFT

(11) **EP 1 941 187 B1**
(45) Veröffentlichungstag und Bekanntmachung des Hinweises auf die Patenterteilung: **11.02.2009**
(21) Anmeldenummer: 06805863.5
(22) Anmeldetag: 26.09.2006
(51) Int. Cl.: F16H 63/32

(54) **SCHALTSCHWINGENANORDNUNG FÜR EIN SCHALTGETRIEBE**
SHIFT ROCKER ARRANGEMENT FOR A SHIFT TRANSMISSION
CONFIGURATION DE LAME DE COMMANDE POUR ENGRENAGE DE CHANGEMENT DE VITESSE

(30) Priorität: 27.10.2005 DE 102005051383
(43) Veröffentlichungstag der Anmeldung: 09.07.2008
(73) Patentinhaber: ZF Friedrichshafen AG, 88038 Friedrichshafen (DE)
(72) Erfinder: HOERING, Gerhard, 88709 Hagnau (DE)
(86) Internationale Anmeldenummer: PCT/EP2006/009335
(87) Internationale Veröffentlichungsnummer: WO 2007/048476

(56) Entgegenhaltungen:
- WO-A-86/03858
- DE-A1- 10 252 191
- DE-A1- 19 753 728
- DE-B1- 2 547 476
- GB-A- 2 017 841

## Beschreibung

Die Erfindung betrifft eine Schaltschwingenanordnung für ein Schaltgetriebe gemäß dem Oberbegriff des Patentanspruchs 1.

Derartige Schaltschwingenanordnungen sind allgemein bekannt, siehe z.B. die DE-A-19753728 oder DE-A 10252191. Sie werden über so genannte Schaltschienen betätigt, die im Scheitelbereich der bügelartigen Schaltschwinge angreifen. An den Enden der Bügelarme der Schaltschwinge sind Gleitsteine angeordnet, die in Umfangsnuten einer axial zu bewegenden bzw. schaltenden Schiebemuffe eingreifen.

Aus der WO 86/03858 ist eine weitere Schaltschwingenanordnung bekannt, bei der die Schaltschwinge auf Lagerzapfen schwenkbar gelagert ist, die von außen durch entsprechende Durchgangsbohrungen in der Wand des Getriebegehäuses hindurch gesteckt sind und ins Innere des Getriebegehäuses ragen. Diese Schwenkzapfen greifen in an den Bügelarmen der Schaltschwinge ausgebildete Zapfenaufnahmen ein.

Ein Nachteil dieser bekannten Konstruktion wird darin gesehen, dass im Bereich der durch die Gehäusewand hindurch gesteckten Schwenkzapfen Dichtstellen entstehen, die mit Dichtelementen abgedichtet werden müssen, wobei immer das Risiko besteht, dass diese Dichtstellen im Laufe einer längeren Einsatzzeit undicht werden, so dass im Getriebegehäuse befindliches Getriebeöl austreten kann. Ein weiterer Nachteil der bekannten Konstruktion ist, dass im Bereich der durch die Gehäusewand hindurch gesteckten Schwenkzapfen die Gehäusewand sehr stabil ausgeführt werden muss, um die auf die Lagerzapfen wirkenden Kräfte aufnehmen zu können, was beispielsweise bei Gussgehäusen zu einem erhöhten Aufwand bei der Konstruktion und Herstellung der Gussteile führt.

Vor diesem Hintergrund liegt der Erfindung die Aufgabe zugrunde, eine Schaltschwingenanordnung der im Oberbegriff des Anspruches 1 bekannten Art zu schaffen, bei der durch die Gehäusewand hindurch führende Durchgangsbohrungen nicht erforderlich sind, so dass die damit verbundenen, oben beschriebenen Nachteile vermieden werden.

Die Lösung dieser Aufgabe ergibt sich aus den Merkmalen des Hauptanspruches, während vorteilhafte Ausgestaltungen und Weiterbildungen der Erfindung den Unteransprüchen entnehmbar sind.

Der Erfindung liegt die Erkenntnis zugrunde, dass Getriebegehäuse im allgemeinen geteilt ausgebildet sind, also beispielsweise in einen Hauptgehäuseteil und einen Gehäusedeckel aufgeteilt sind, so dass das Gehäuseinnere zugänglich ist, womit die Möglichkeit besteht, Lagerelemente zum Lagern der wenigstens einen Schaltschwinge direkt an der Gehäuse-Innenwand vorzusehen, ohne die Gehäusewand durchbohren oder durchbrechen zu müssen.

Demnach geht die Erfindung aus von einer Schaltschwingenanordnung für ein Schaltgetriebe, umfassend eine Schaltschwinge in der Form eines ein zu schaltendes Getriebeelement umgreifenden, zweiarmigen Bügels, welcher über an den Bügelarmen angeordnete Schwenklager um eine im Wesentlichen in der Bügelebene liegende Schwenkachse in einem Getriebegehäuse schwenkbar gelagert ist.

Zur Lösung der gestellten Aufgabe ist vorgesehen, dass die Schaltschwinge über an den Bügelarmen ausgebildete Lagerelemente in an der geschlossenen Gehäuse-Innenwand vorgesehenen Gegenlagerelementen gelagert ist.

Durch diese Ausgestaltung der Lagerelemente bzw. der Gegenlagerelemente können durch die Gehäusewand hindurch führende Durchgangsbohrungen vermieden werden. Dabei lässt sich die Tatsache, dass das Getriebegehäuse beispielsweise in einen Hauptgehäuseteil und einen Gehäusedeckel geteilt ist, in besonders günstiger Weise für die Montage der Schaltschwinge im Getriebegehäuse nutzen, indem beispielsweise beim Ansetzen des Gehäusedeckels ein Lagerzapfen in eine Zapfenaufnahme eingeführt wird, wie anhand von Ausführungsbeispielen noch näher dargelegt wird.

Die Lagerelemente und Gegenlagerelemente gemäß der Erfindung sehen vor, dass die an den Bügelarmen ausgebildeten Lagerelemente jeweils durch an den Bügelarmen angeformte schwenkzapfenartige Lagerflächen gebildet sind, die in an der Innenwand des Getriebegehäuses vorgesehenen Zapfenaufnahmen gelagert werden.

Da die Schwenkwinkel der Schaltschwingen im allgemeinen vergleichsweise klein sind und beispielsweise weniger als 30°betragen, genügt es, wenn die Lagerelemente und die Gegenlagerelemente so ausgebildet sind, dass sie einen derartigen Schwenkwinkel gerade zulassen. Diese Einschränkung ermöglicht eine konstruktiv besonders günstige Ausgestaltung, bei der an den Bügelarmen jeweils in der zur Schwenkachse senkrechten Ebene seitlich zwei kreisabschnittartige Erweiterungen angeformt sind, deren Umfangsflächen die Lagerflächen bilden, wobei die Zapfenaufnahmen durch zu den Lagerflächen komplementäre, diese nur teilweise umgreifende Lagerschalen gebildet sind, und wobei der nicht von den Lagerschalen umgriffene Bereich der Umfangsflächen den möglichen Schwenkwinkel definiert, wie anhand eines Ausführungsbeispiels noch dargelegt wird.

Weiterhin sieht die Erfindung vor, dass die Zapfenaufnahmen jeweils an einem Lagerriegel ausgebildet sind, welcher sich senkrecht zu einer Teilungsebene des Getriebegehäuses zwischen dem Hauptgehäuseteil und einem Gehäusedeckels erstreckt, und dessen Enden einerseits im Hauptgehäuseteil und andererseits im Gehäusedeckel gelagert sind.

Die Montage der Schaltschwinge erfolgt dann in der Weise, dass die Lagerriegel mit den Zapfenaufnahmen auf die schwenkzapfenartigen Lagerflächen der Bügelarme aufgesetzt werden, dass sodann die Schaltschwinge mit den Lagerriegeln in das Gehäuse eingesetzt wird, wobei die gehäuseseitigen Enden der Lagerriegel in zugeordnete Aufnahmen im Gehäuse eingeführt werden, und dass dann der Gehäusedeckel aufgesetzt wird, wobei die gehäusedeckelseitigen Enden der Lagerriegel in zugeordnete Aufnahmen im Gehäusedeckel eingeführt werden. Zu diesem Zweck sind vorzugsweise an den Enden des Lagerriegels jeweils Lagerzapfen ausgebildet, die in zugeordnete Zapfenaufnahmen an der Gehäuseinnenseite bzw. der Deckelinnenseite eingreifen.

Gemäß einer anderen konstruktiven Ausgestaltung der Erfindung ist vorgesehen, dass das Getriebegehäuse im Bereich der Zapfenaufnahmen in einer im Wesentlichen in einer zu der die Schwenkachse enthaltenden Ebene parallelen Teilungsebene geteilt ist, und dass jeweils eine Lagerschale einer jeden Zapfenaufnahme direkt an der Gehäuse-Innenwand und die andere Lagerschale an der Innenwand des Gehäusedeckels ausgebildet ist.

Die Montage der Schaltschwinge erfolgt dann in der Weise, dass diese mit den an den Bügelarmen ausgebildeten schwenkzapfenartigen Lagerflächen in die an der Gehäuse-Innenwand ausgebildete Lagerschale eingelegt wird, und dass dann der Deckel aufgesetzt wird, wobei sich die an der Innenwand des Gehäusedeckels ausgebildete Lagerschale ebenfalls an die zugeordnete Lagerfläche der Schaltschwinge anlegt, wie an einem weiteren Ausführungsbeispiel der Erfindung erläutert werden wird.

Um bei der Ausführungsform mit den die Zapfenaufnahmen bildenden Lagerriegeln Passungsveränderungen infolge unterschiedlicher Ausdehnungen bei Erwärmung zu vermeiden, ist gemäß einer weiteren Ausgestaltung der Erfindung vorgesehen, dass die Lagerriegel aus dem gleichen Material hergestellt sind wie das Getriebegehäuse bzw. der Gehäusedeckel.

Die Erfindung lässt sich anhand mehrerer Ausführungsbeispiele weiter erläutern. Dazu ist der Beschreibung eine Zeichnung beigefügt.
In dieser zeigt
- Fig. 1: in einer perspektivischen Ansicht eine Schaltschwinge, die an zwei im Getriebegehäuse angeordneten Lagerriegeln gelagert ist,
- Fig. 2: einen Längsschnitt durch ein Getriebegehäuse mit einer Schaltschwinge gemäß der Fig. 1,
- Fig. 3: einen Längsschnitt durch ein Getriebegehäuse mit einer Schaltschwinge, die direkt in an der Gehäuse-Innenwand ausgebildeten Lagerschalen gelagert ist und
- Fig. 4: einen Längsschnitt durch ein Getriebegehäuse mit zwei Schaltschwingen.

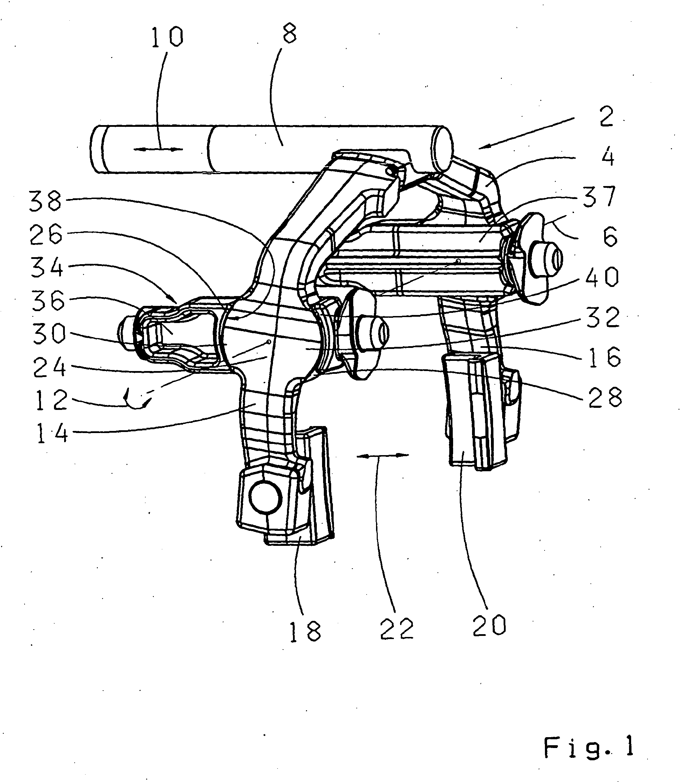

Die in Fig. 1 dargestellte Schaltschwingenanordnung 2 umfasst eine Schaltschwinge 4 in der Form eines ein nicht dargestelltes; zu schaltendes Getriebeelement, beispielsweise eine Schiebemuffe, umgreifenden zweiarmigen Bügels, welcher um eine im Wesentlichen in der Bügelebene liegende Schwenkachse 6 in einem ebenfalls nicht dargestellten Getriebegehäuse schwenkbar gelagert ist. Im Scheitelbereich der Schaltschwinge 4 greift eine Schaltschiene 8 an, die manuell oder mittels eines Stellantriebes in Richtung des Doppelpfeils 10 axial verschiebbar ist, wobei die Schaltschwinge 4 in Richtung des Doppelpfeils 12 verschwenkt wird.

An den Enden der Bügelarme 14, 16 sind Gleitsteine 18 bzw. 20 angeordnet, die in das zu schaltende Getriebeelement eingreifen und dieses in Richtung des Doppelpfeils 22 verstellen.

An jedem der Bügelarme 14, 16 ist ein Lagerelement ausgebildet, welches in einem an der Gehäuse-Innenwand vorgesehenen Gegenlagerelement gelagert ist. Ein Lagerelement und ein zugeordnetes Gegenlagerelement werden im Folgenden in Verbindung mit dem Bügelarm 14 näher erläutert. Das dem Bügelarm 16 zugeordnete Lagerelement bzw. Gegenlagerelement ist jeweils gleich aufgebaut, so dass diese deshalb nicht im Einzelnen beschrieben werden.

Das an dem Bügelarm 14 ausgebildete Lagerelement 24 ist durch an dem Bügelarm angeformte, schwenkzapfenartige Lagerflächen 26 bzw. 28 gebildet. Dazu sind an dem Bügelarm 14 jeweils in einer zur Schwenkachse 6 senkrechten Ebene seitlich zwei kreisabschnittartige Erweiterungen 30 bzw. 32 angeformt, deren Umfangsflächen die Lagerflächen 26 bzw. 28 bilden.

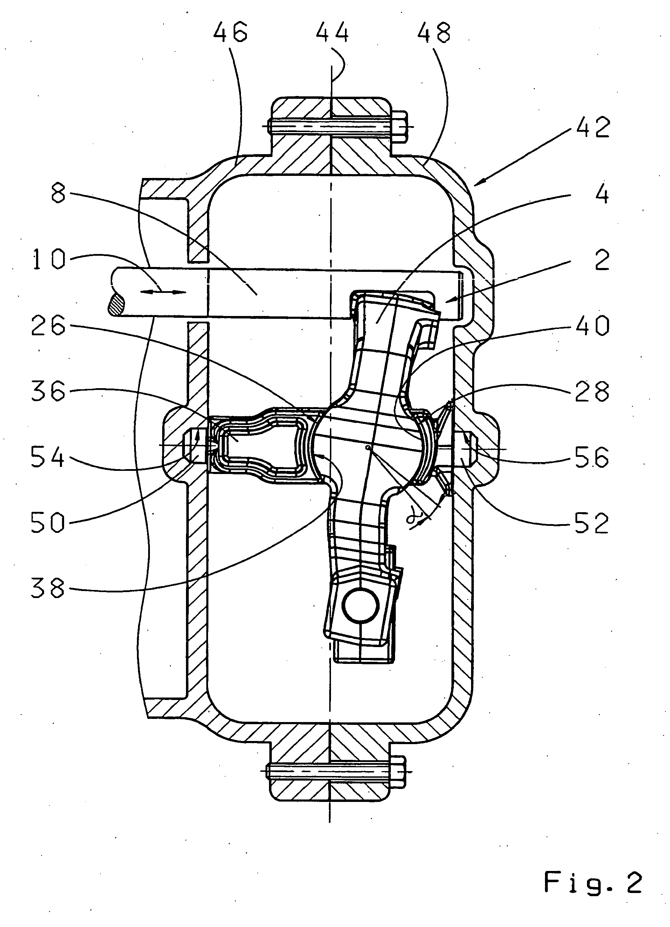

Das Lagerelement 24 ist in einem zugeordneten, als Ganzes mit 34 bezeichneten Gegenlagerelement gelagert, welches im Folgenden im Einzelnen beschrieben wird. Das Gegenlagerelement 34 umfasst einen Lagerriegel 36, welcher auf eine anhand der Fig. 2 näher beschriebene Weise in dem Getriebegehäuse angeordnet ist, und dem ein dem zweiten Bügelarm 16 zugeordneter zweiter Lagerriegel 37 entspricht.

An dem Lagerriegel 36 sind zwei zu den Lagerflächen 26, 28 komplementäre Lagerschalen 38 bzw. 40 ausgebildet, welche die zugeordneten Lagerflächen 26, 28 umgreifen. Die Lagerschalen 38, 40 bilden demnach eine Zapfenaufnahme für das schwenkzapfenartige Lagerelement 24. Die Lagerschalen 38, 40 umgreifen die Lagerflächen 26, 28 jeweils nur teilweise, wobei durch den von den Lagerschalen nicht umgriffenen Teil der Lagerflächen der mögliche Schwenkwinkel der Schaltschwinge 4 definiert ist.

Fig. 2 zeigt die Schaltschwingenanordnung 2 der Fig. 1. Diese Fig. 2 lässt insbesondere Art und Weise erkennen, wie der Lagerriegel 36 im als Ganzes mit 42 bezeichneten Getriebegehäuse gelagert ist. Das Getriebegehäuse 42 ist in einer im Wesentlichen in einer zu der die Schwenkachse 6 enthaltenden Ebene parallelen Teilungsebene 44 geteilt, wobei der in Fig. 2 links der Teilungsebene 44 befindliche Gehäuseteil als Hauptgehäuseteil 46 und der rechts der Teilungsebene 44 befindliche Teil als Gehäusedeckel 48 bezeichnet wird.

Der Lagerriegel 36 erstreckt sich im Wesentlichen senkrecht zur Teilungsebene 44 entlang einer die Schaltschwinge 4 seitlich einfassenden Gehäusewand, wie sich aus der Fig. 2 ohne weiteres ergibt. An den Enden des Lagerriegels 36 sind jeweils Lagerzapfen 50 bzw. 52 ausgebildet, wobei der dem Hauptgehäuseteil 46 zugewandte Lagerzapfen 50 in einer Zapfenaufnahme 54 an der Gehäuseinnenseite und der dem Gehäusedeckel 48 zugewandte Lagerzapfen 52 in einer Zapfenaufnahme 56 an der Deckelinnenseite gelagert ist.

Zur Montage der Schaltschwingenanordnung 2 werden zunächst die beiden Lagerriegel 36 bzw. 37 an die zugeordneten Bügelarme 14 bzw. 16 angesetzt, also die Lagerelemente und Gegenlagerelemente zusammengefügt. Sodann wird die aus der Schaltschwinge 4 und den Lagerriegeln 36, 37 bestehende Baueinheit in das offene Getriebegehäuse 42 so eingesetzt, dass die gehäuseseitigen Lagerzapfen, beispielsweise der Lagerzapfen 50, in die zugeordneten Aufnahmen, beispielsweise die Zapfenaufnahme 54, eingreifen. Anschließend wird der Gehäusedeckel 48 an das Hauptgehäuse 46 angesetzt, wobei die deckelseitigen Lagerzapfen, beispielsweise der Lagerzapfen 52, in die zugeordneten Zapfenaufnahmen, beispielsweise die Zapfenaufnahme 56, eingreifen. Durch Verschrauben des Gehäusedeckels 48 mit dem Hauptgehäuse 46 werden die Lagerriegel 36 bzw, 37 in ihrer Montageposition fixiert.

Wie Fig. 2 weiter erkennen lässt, umgreifen die an dem Lagerriegel 36 ausgebildeten Lagerschalen 38 bzw. 40 die zugeordneten Lagerflächen 26 bzw. 28 nur teilweise, wobei der von den Lagerschalen 38, 40 nicht umgriffene Teil der Lagerflächen 26, 28 den möglichen Schwenkwinkel α definiert.

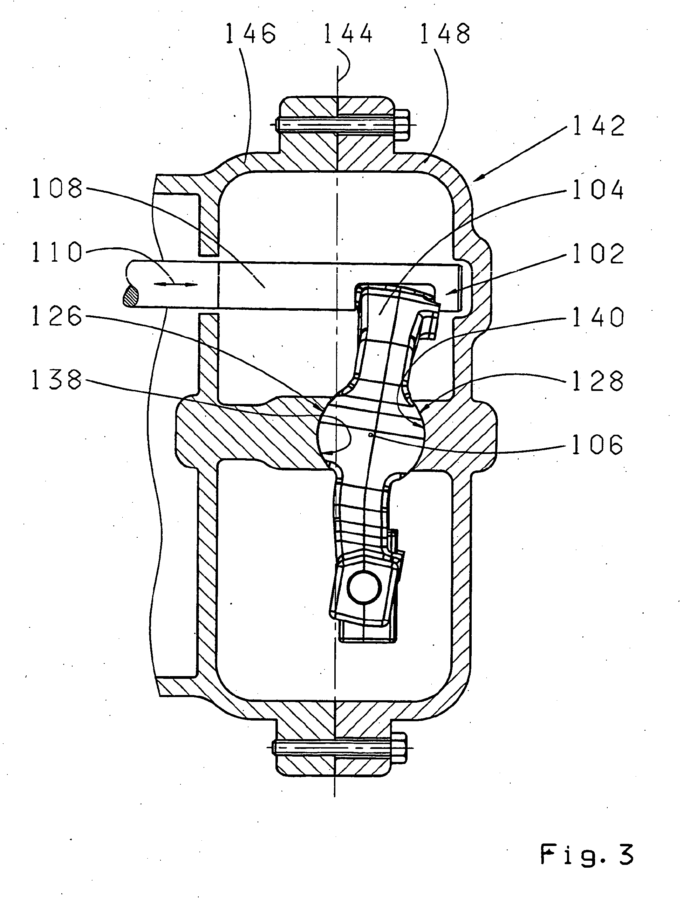

Fig. 3 zeigt eine Schaltschwingenanordnung 102 ähnlich der in Fig. 2 dargestellten Schaltschwingenanordnung 2, wobei in der Fig. 3 gleiche Teile mit den gleichen Bezugszeichen, vermehrt um 100 gemäß den Teilen der Fig. 2, bezeichnet sind. Die Schaltschwinge 104 ist gleich aufgebaut wie die Schaltschwinge 4, so dass sie nicht nochmals im Einzelnen beschrieben werden muss. Die den Lagerflächen 126 bzw. 128 zugeordneten Lagerschalen 138, 140 sind im Gegensatz zur Fig. 2 nicht an einem separaten Lagerriegel angeordnet, sondern direkt an der Innenwand des Hauptgehäuses 146 bzw. des Gehäusedeckels 148 ausgebildet, wie sich aus der Fig. 3 ohne weiteres ersehen lässt. Auf diese Weise ist jeweils eine Lagerschale dem Hauptgehäuseteil 146 und die andere Lagerschale dem Gehäusedeckel zugeordnet. Durch das Ansetzen des Gehäusedeckels 148 am Hauptgehäuseteil 146 werden die beiden Lagerschalen 138, 140 zu einer Zapfenaufnahmen für das am Bügelarm der Schaltschwinge ausgebildete Lagerelement.

Zur Montage der Schaltschwingenanordnung 102 wird die Schaltschwinge in das offene Getriebegehäuse 142 so eingesetzt, dass sich die Lagerfläche 126 an die zugeordnete Lagerschale 138 anlegt. Sodann wird der Gehäusedeckel 148 an das Hauptgehäuseteil 146 angesetzt, wobei sich die am Gehäusedeckel 148 ausgebildete Lagerschale 140 an die zugeordnete Lagerfläche 128 anlegt. Durch Verschrauben des Gehäusedeckels 148 mit dem Hauptgehäuse 146 wird die Schaltschwinge 104 im Getriebegehäuse 142 schwenkbar in ihrer Montageposition fixiert.

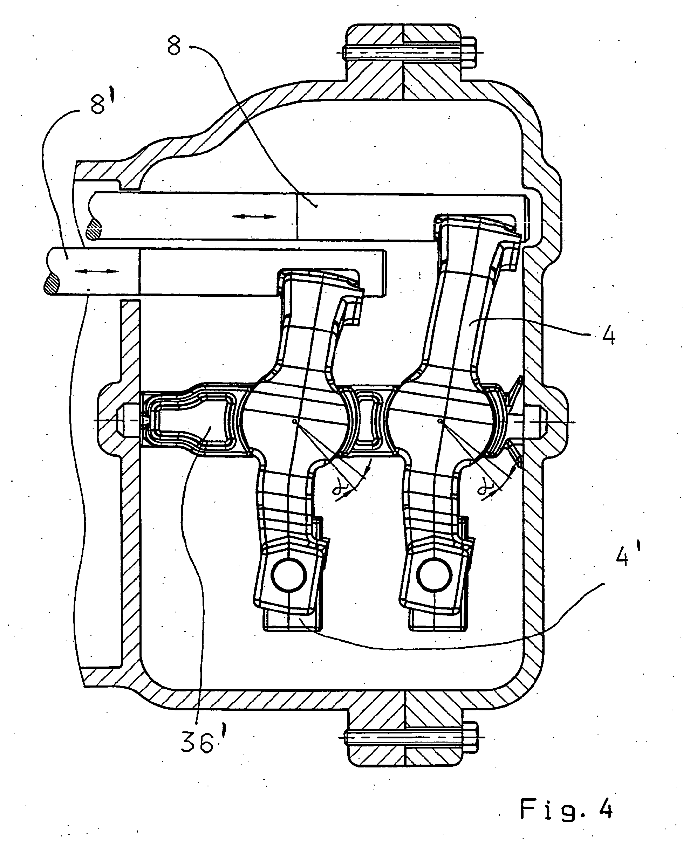

In der Fig. 4 ist eine Anordnung nach der Fig. 2 dargestellt, bei der neben der Schaltschiene 8 eine zweite Schaltschiene 8' vorgesehen ist, mit der eine zweite Schaltschwinge 4' betätigt werden kann. Beide Schaltschwingen 4 und 4' sind in einem gemeinsamen Lagerriegel 36' schwenkbar angeordnet. In gleicher Weise, wie hier zwei Schaltschienen 4 und 4' angeordnet sind, ist auch die Anordnung einer größeren Zahl von Schaltschienen möglich. Dazu muss eine entsprechende Anzahl von Bohrungen in einem entsprechend langen Lagerriegel vorgesehen werden.

### Bezugszeichen

- 2: Schattschwingenanordnung
- 4,4': Schaltschwinge
- 6: Schwenkachse
- 8, 8': Schaltschiene
- 10: Doppelpfeil
- 12: Doppelpfeil
- 14: Bügelarm
- 16: Bügelarm
- 18: Gleitstein
- 20: Gleitstein
- 22: Doppelpfeil
- 24: Lagerelement
- 26: Lagerfläche
- 28: Lagerfläche
- 30: Kreisabschnittartige Erweiterung
- 32: Kreisabschnittartige Erweiterung
- 34: Gegenlagerelement
- 36, 36': Lagerriegel
- 37: Lagerriegel
- 38: Lagerschale
- 40: Lagerschale
- 42: Getriebegehäuse
- 44: Teilungsebene
- 46: Hauptgehäuseteil
- 48: Gehäusedeckel
- 50: Lagerzapfen
- 52: Lagerzapfen
- 54: Zapfenaufnahme
- 56: Zapfenaufnahme

- 102: Schaltschwingenanordnung
- 104: Schaltschwinge
- 106: Schwenkachse
- 108: Schaltschiene
- 110: Doppelpfeil
- 126: Lagerfläche
- 128: Lagerfläche
- 138: Lagerschale
- 140: Lagerschale
- 142: Getriebegehäuse
- 144: Teilungsebene
- 146: Hauptgehäuseteil
- 148: Gehäusedeckel

## Patentansprüche

1. Schaltschwingenanordnung (2) für ein Schaltgetriebe, umfassend eine Schaltschwinge (4) in der Form eines ein zu schaltendes Getriebeelement umgreifenden zweiarmigen Bügels, welcher über an den Bügelarmen (14, 16) angeordnete Schwenklager um eine im Wesentlichen in der Bügelebene liegende Schwenkachse (6) in einem Getriebegehäuse (42) schwenkbar gelagert ist, wobei die Schaltschwinge (4) über an den Bügelarmen (14, 16) ausgebildete Lagerelemente (24) in an der geschlossenen Gehäuse-Innenwand vorgesehenen Gegenlagerelementen (34) gelagert ist, und wobei die an den Bügelarmen (14, 16) ausgebildeten Lagerelemente (24) jeweils durch an den Bügelarmen angeformte schwenkzapfenartige Lagerflächen (26, 28) gebildet sind, die in an der Innenwand des Getriebegehäuses (42) vorgesehenen Zapfenaufnahmen (38, 40) gelagert sind, **dadurch gekennzeichnet, dass** an den Bügelarmen (14, 16) jeweils in einer zur Schwenkachse (6) senkrechten Ebene seitlich zwei kreisabschnittartige Erweiterungen (30, 32) angeformt sind, deren Umfangsflächen die Lagerflächen (26, 28) bilden, und dass die Zapfenaufnahmen durch zu den Lagerflächen (26, 28) komplementäre, diese teilweise umgreifende Lagerschalen (38, 40) gebildet sind.

2. Schaltschwingenanordnung nach Anspruch 1, **dadurch gekennzeichnet, dass** das Getriebegehäuse (42) in einer im Wesentlichen in einer zu der die Schwenkachse (6) enthaltenden Ebene parallelen Teilungsebene (44) in einen Hauptgehäuseteil (46) und einen Gehäusedeckel (48) geteilt ist, und dass die Zapfenaufnahmen, d.h. die Lagerschalen (38, 40) jeweils an einem Lagerriegel (36, 37) ausgebildet sind, welcher sich im Wesentlichen senkrecht zu der Teilungsebene (44) des Getriebegehäuses (42) erstreckt, und dessen Enden einerseits im Hauptgehäuseteil (46) und andererseits im Gehäusedeckel (48) gelagert sind.

3. Schattschwingenanordnung nach Anspruch 2, **dadurch gekennzeichnet, dass** an den Enden des Lagerriegels (36) jeweils Lagerzapfen (50, 52) ausgebildet sind, die in zugeordnete Zapfenaufnahmen (54, 56) an der Innenseite des Hauptgehäuseteils (46) bzw. des Gehäusedeckels (48) eingreifen.

4. Schaltschwingenanordnung nach Anspruch 1, **dadurch gekennzeichnet, dass** das Getriebegehäuse (142) im Bereich der Zapfenaufnahmen, d.h. der Lagerschalen (138, 140) in einer im Wesentlichen in einer zu der die Schwenkachse (106) enthaltenden Ebene parallelen Teilungsebene (144) in einen Hauptgehäuseteil (146) und einen Gehäusedeckel (148) geteilt ist, und dass jeweils eine Lagerschale (138) einer jeden Zapfenaufnahme direkt an der Innenwand des Hauptgehäuseteils (146) und die andere lagerschale (140) an der Innenwand des Gehäusedeckels (148) ausgebildet ist.

5. Schaltschwingenanordnung nach einem der Ansprüche 2 oder 3, **dadurch gekennzeichnet, dass** die Lagerriegel (36, 37) aus dem gleichen Material hergestellt sind wie das Getriebegehäuse (42).

## Claims

1. Lever arrangement (2) for a mechanical transmission comprising a lever (4) in the form of a two-armed bow encompassing a transmission component to be shifted, with this bow being slewably supported in a transmission housing (42) by means of swivel bearings arranged on the bow arms (14, 16), and swiveling around an essentially bow plane-oriented swivel axis (6), with the lever (4) being supported in thrust bearing elements (34) on the closed housing inner wall via bearing elements (24) on the bow arms (14,16), and with each bearing element (24) on the bow arms (14, 16) being formed by pivot-type bearing surfaces (26, 28) supported in pivot seats (38, 40) on the inner wall of the transmission housing (42), **characterized in that** each bow arm (14, 16) features two lateral circular-segment-type extensions (30, 32) in a vertical plane relative to the swivel axis (6), whose peripheral surfaces form the bearing surfaces (26, 28), and that the pivot seats are formed by bearing shells (38, 40) complementing and partially encompassing the bearing surfaces (26, 28).

2. Lever arrangement according to claim 1, **characterized in that** a plane of osculation (44) essentially parallel to a plane containing the swivel axis (6) separates the transmission housing (42) into a main housing part (46) and a housing cover (48), and that each pivot seat, i.e. each bearing shell (38, 40), is formed on a bearing detent (36, 37) extending essentially vertically relative to the plane of osculation (44) of the transmission housing (42) and whose ends are supported on the one side in the main housing part (46) and on the other side in the housing cover (48).

3. Lever arrangement according to claim 2, **characterized in that** the ends of the bearing detent (36) feature bearing journals (50, 52) engaging with pivot seats (54, 56) on the inner side of the main housing part (46) or the housing cover (48).

4. Lever arrangement according to claim 1, **characterized in that** a plane of osculation (144) essentially parallel to a plane containing the swivel axis (106) separates the transmission housing (142) in the area of the pivot seats, i. e. the bearing shells (138, 140), into a main housing part (146) and a housing cover (148), and that one bearing shell (138) of each pivot seat is formed direct on the inner wall of the main housing part (146) and the other bearing shell (140) is formed on the inner wall of the housing cover (148).

5. Lever arrangement according to one of the claims 2 or 3, **characterized in that** the bearing detents (36, 37) are made of the same material as the transmission housing (42).

## Revendications

1. Disposition de basculeurs (2) pour une boîte mécanique, comprenant un basculeur (4) sous forme d'un étrier à deux bras englobant un élément de boîte de vitesses à coupler, cet étrier étant logé de façon orientable dans un carter de boîte de vitesses (42) par l'intermédiaire de paliers pivotants disposés au niveau des bras de l'étrier (14, 16) autour d'un axe de pivotement (6) étant disposé essentiellement dans le plan de l'étrier, sachant que le basculeur (4) est logé par l'intermédiaire d'éléments de support (24) réalisés au-dessus des bras de l'étrier (14,16) dans des éléments de contre-support (34) prévus au niveau de la paroi intérieure fermée du carter, et sachant que les éléments de support (24) réalisés au niveau des bras de l'étrier (14, 16) sont formés respectivement par des surfaces de support (26, 28) en forme de tourillon réalisées au niveau des bras de l'étrier, celles-ci étant logées dans des supports de tourillon (38, 40) prévus au niveau de la paroi intérieure du carter de la boîte de vitesses (42), **caractérisée en ce que** au niveau des bras de l'étrier (14, 16) sont formées, respectivement dans un plan vertical par rapport à l'axe de pivotement (6), latéralement deux extensions en forme de segments de cercle (30, 32), dont les surfaces circonférentielles forment les surfaces de support (26, 28), et **en ce que** les logements de tourillon sont formés par des coquilles de coussinet (38, 40) complémentaires aux surfaces de support (26, 28) et les enveloppant partiellement.

2. Disposition de basculeurs selon la revendication 1, **caractérisée en ce que** le carter de boîte de vitesses (42) est divisé en une partie de carter principal (46) et un couvercle de carter (48), et cela dans un plan de division (44) parallèle essentiellement à un plan contenant un axe de pivotement (6), et **en ce que** les logements de tourillon, c'est-à-dire les coquilles de coussinet (38, 40) sont réalisées respectivement sur un verrou de palier (36, 37), celui-ci s'étendant essentiellement verticalement par rapport au plan de division (44) du carter de boîte de vitesses (42), et dont les extrémités sont logées d'une part dans la partie de carter principal (46) et d'autre part dans le couvercle de carter (48).

3. Disposition de basculeurs selon la revendication 2, **caractérisée en ce que** sur les extrémités du verrou de palier (36) sont réalisés respectivement des tourillons (50, 52), s'engageant dans les logements de tourillon associés (54, 56) sur la face intérieure de la partie de carter principal (46) ou du couvercle de carter (48).

4. Disposition de basculeurs selon la revendication 1, **caractérisée en ce que** le carter de boîte de vitesses (142) est divisé dans la zone des logements de tourillon, c'est-à-dire des coquilles de coussinet (138, 140), en une partie de carter principal (146) et un couvercle de carter (148), et cela dans un plan de division (144) parallèle essentiellement à un plan contenant un axe de pivotement (106), et **en ce que** respectivement une coquille de coussinet (138) de chaque logement de tourillon est réalisée directement sur la paroi intérieure de la partie de carter principal (146) et l'autre coquille de coussinet (140) sur la paroi intérieure du couvercle de carter (148).

5. Disposition de basculeurs selon une des revendications 2 ou 3, **caractérisée en ce que** les verrous de palier (36, 37) sont réalisés du même matériau que le carter de boîte de vitesses (42).
